# EUROPEAN PATENT SPECIFICATION

(11) **EP 4 202 258 B1**
(45) Date of publication and mention of the grant of the patent: **12.02.2025**
(21) Application number: 22215657.2
(22) Date of filing: 21.12.2022
(51) Int. Cl.: F16H 3/00, F16H 37/04

(54) **IMPROVED ELECTRIC HYBRID TRANSMISSION ARCHITECTURE**
VERBESSERTE HYBRID-ELEKTRISCHE GETRIEBEARCHITEKTUR
ARCHITECTURE DE TRANSMISSION HYBRIDE ÉLECTRIQUE AMÉLIORÉE

(30) Priority: 21.12.2021 IT 202100032045
(43) Date of publication of application: 28.06.2023
(73) Proprietor: CNH Industrial Italia S.p.A., 10156 Torino (IT)
(72) Inventor: Borghi, Alberto, 42033 Carpineti (RE) (IT); Inversani, Alessio, 41030 Cavezzo (MO) (IT); Sedoni, Enrico, 41126 Modena (IT); Forte, Michelantonio, 41122 Modena (IT); Bassani, Giuseppe, 41058 Vignola (MO) (IT)
(74) Representative: CNH Industrial IP Department

(56) References cited:
- EP-A1- 2 474 759
- WO-A1-2020/148452

## Description

### TECHNICAL FIELD

The present invention relates to a dual clutch transmission electric hybrid architecture, in particular for an off road vehicle, and to a related method for controlling the gear shifting of such dual clutch transmission.

The present invention finds its preferred, although not exclusive, application in agricultural vehicle transmission; reference will be made to this application by way of example below.

### BACKGROUND OF THE INVENTION

Off road vehicles such as agricultural vehicles are nowadays equipped with dual clutch transmissions (DCT) in order to improve the performances of the vehicle itself, e.g. faster shifting of the speed ratios and better efficiency due to the reduced number of clutches implied by the design. Moreover, DCT configuration offers more than one way for a proper design of its control.

Essentially, DCT comprises two main clutches, namely forward and rearward clutches, that are deputed to select the forward and reverse direction of motion of the tractor and two additional clutches, namely odd and even clutches, configured to select two auxiliary shafts which carries the synchronizer elements. DCT further comprises a plurality of synchronizer elements which may be moved from a neutral position to engage one gear mounted concentric to the shaft and free to rotate in respect to the shaft itself; a counter wheel of the engaged gear is mounted on the output shaft of the DCT and therefore the engagement of the synchronizer define the speed ratio between an input shaft, namely the engine shaft, and an output shaft, namely the output shaft of the DCT gearbox.

The sequence of the gears, namely from 1 to 8, is distributed according to the logic of even gears driven by the even clutch and odd gears driven by odd clutch. Therefore odd and even clutches are swapped alternatively in a gear shift sequence and the selection of the incoming gear ratio is done by the engagement of the appropriate synchronizer element. It is clearly understood that the core part of a DCT architecture is the operation of synchronization as it generates the quality of the shifting.

However, such coupling by means of synchronizers shows various limitations.

Indeed, the actuation of such electro-hydraulic synchronizers is high dependent on temperature and on oil characteristics. Furthermore, the actuations is low repeatable.

The electro-hydraulic synchronizers furthermore needs a complex arrangement of many components, such as coils, solenoids, a pump, seals, servo-mechanism) that determines a low reliability of the system or the need of providing a redundancy that increases costs and occupies space.

Clearly, since synchronizers operates via friction, wear problems and heat dissipation are further evident problems.

The above problems are furthermore felt in gear ranges synchronizations because of the high inertia and high delta speed that has to be managed.

Finally the cost of the solution, related to the cost of the synchronizers and of the hydraulic requested to drive their shifting is relevant, as the cost of the single installation has to be multiplied by the number of synchronizers.

Some architectures are known, such as in patent applications IT102018000007576 A1 or WO2020148452A1 that however shows the presence of a high number of electric machines and of clutches and auxiliary shafts to manage the gears shift, thereby increasing costs and weight of the vehicle and providing a complex electronic control and layout.

Therefore, the need is felt to improve existing dual clutch transmission architecture in order to improve their performances and to improve the comfort during the gear shifting and to reduce their total costs and encumbrance.

An aim of the present invention is to satisfy the above mentioned needs in a cost-effective and optimized way.

### SUMMARY OF THE INVENTION

The aforementioned aim is reached by an electric hybrid architecture for a dual clutch transmission according to claim 1 and a related control method according to claim 9.

### BRIEF DESCRIPTION OF THE DRAWINGS

For a better understanding of the present invention, a preferred embodiment is described in the following, by way of a non-limiting example, with reference to the attached drawings wherein the only figure is a schematic representation of a dual clutch transmission architecture according to the present invention

### DETAILED DESCRIPTION OF THE INVENTION

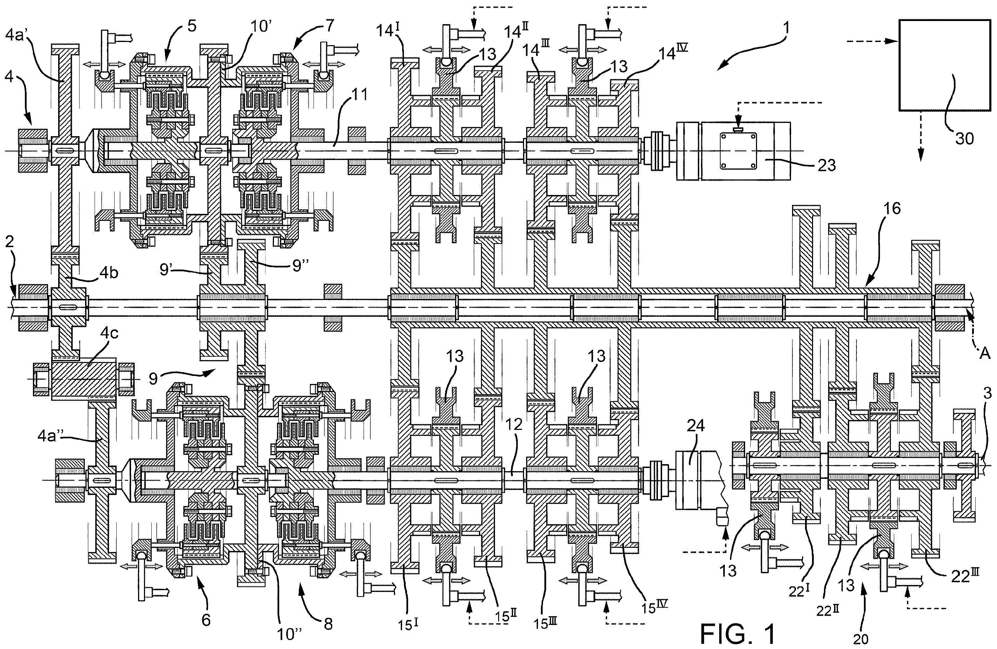

Figure 1 discloses a dual clutch transmission 1, DCT, of an off road vehicle, such as a tractor (not illustrated), comprising an engine input shaft 2, operatively connected to an engine (not illustrated) of the vehicle, and an output shaft 3, which can be coupled to the drive system of the off road vehicle.

Transmission 1 moreover comprises a first main clutch 5, hereinafter "forward clutch", and a second main clutch 6, hereinafter "rearward clutch", both coupled to the engine input shaft 2 via an input stage 4. Preferably the forward clutch 5 and the rearward clutch 6 are placed opposite each other with respect to the longitudinal axis A of input shaft 2.

As per se known the forward clutch 5 is configured to couple the engine input shaft 2 to the output shaft 3 in order to allow a forward motion of the work vehicle while the rearward clutch 6 is configured to couple the engine input shaft 2 to the output shaft 3 in order to allow a rearward motion of the work vehicle.

Transmission 1 further comprise a first clutch 7, hereinafter "even clutch", and a second clutch 8, hereinafter "odd clutch". The even clutch 7 is configured to couple a first auxiliary shaft 11, hereinafter "even shaft", with the forward clutch 5. The odd clutch 8 is configured to couple a first auxiliary shaft 12, hereinafter "odd shaft", with the rearward clutch 6.

Advantageously, the forward clutch 5 is coupled to the even clutch 7 by a first housing 10' and the rearward clutch 6 is coupled to the odd clutch 8 by a second housing 10". The first and the second housing 10', 10'' are coupled together by an intermediate gear 9 carried by the engine input shaft.

Preferably the intermediate gear 9 defines a first and a second gears 9', 9" configured to mesh with respectively first housing 10' through a first gear ratio and and to second housing 10'' through a second gear ratio. The first and the second gears 9', 9'' have different diameters or teeth thereby defining different gear ratios between them.

In view of above, thanks to the coupling of the housings 10', 10'' with the intermediate gear 9, the even shaft 11 may be coupled to the rearward clutch 6 and the odd shaft 12 may be coupled to the forward clutch 5.

The housings 10', 10'' are furthermore coupled via input stage 4 to the input shaft 2. The input stage 4 preferably comprises a pair of gears 4a', 4a'' configured to be engaged with, respectively, housings 10', 10" and configured to mesh with a pair of intermediate gears 4b, 4b of which one gear 4b is fixedly carried by input shaft 2 and the other is interposed between the gears 4a'' and the gear 4b.

The even shaft 11 and the odd shaft 12 each comprise a plurality of selection elements, e.g. dog or joint clutches 13, fixedly carried by the respective shaft 11, 12 and therefore rotate together with to these latter.

Preferably the even or odd shaft accommodates a plurality of gears having a different size one with respect to the other and that are supported in a rotatable free manner the respective shaft 11, 12, e.g. by means of bearings, so that they are not forced to rotate to the same speed of the respective shaft 11, 12 when the engaging dog clutch 13 is in their neutral position.

Preferably the even shaft 11 may comprise four gears 14, namely a first gear 14^{I} having the biggest diameter, a fourth gear 14^{IV} having the smallest diameter and a second and third gears 14^{II}, 14^{III} having respective diameters comprised between the ones of first and the fourth gears.

Similarly, the odd shaft 12 may comprise four gears 15, namely a first gear 15^{I} having the biggest diameter, a fourth gear 15^{IV} having the smallest diameter and a second and third gears 15^{II}, 15^{III} having respective diameters comprised between the ones of first and the fourth gears.

Advantageously the gear 14^{I} has the same diameter of gear 15^{I}, gear 14^{II} has the same diameter of gear 15^{II}, gear 14^{III} has the same diameter of gear 15^{III} and gear 14^{IV} has the same diameter of gear 15^{IV}.

The gears of gears sets 14, 15, when selected represent the different speed ratios of the transmission; namely first speed ratio selecting gear 15^{IV}, second speed ratio selecting gear 14^{IV}, third speed ratio selecting gear 15^{III}, fourth speed ratio selecting gear 14^{III}, fifth speed ratio selecting gear 15^{II}, sixth speed ratio selecting gear 14^{II}, seventh speed ratio selecting gear 15^{I} or eighth speed ratio selecting gear 14^{I}

As said above, gears of the gears sets 14, 15 may be selected by a dog clutch 13 configured to couple the shaft with the chosen gear. Preferably the even shaft 11 may comprise two dog clutches 13 interposed respectively between the gear 14^{I} - 14^{II} and 14^{III} -14^{IV}. Similarly the odd shaft 12 may comprise two dog clutches 13 interposed respectively between the gear 15^{I} - 15^{II} and 15^{III} -15^{IV}.

The counter wheel of the engaged gears of the gear sets 14, 15 is rigidly mounted on an intermediate shaft 16, that is preferably concentric with the engine shaft 2 and that is connected to the output shaft 3 via a gear range group stage 20 that is directly carried by output shaft 3.

The gear range group 20 is configured to couple the intermediate shaft 16 to the output shaft 3 by choosing in between a plurality of gear ratios which are multiplied by the above described DCT gear ratios.

For example, the range selecting stage 20 may comprise first gear 22^{I} called "low" range, a second gear 22^{II} called "medium" range, a third gear 22^{III} called " speed" having different dimensions and configured to be selectively coupled to the output shaft 3 by means of the respective dog clutches 13. In this way, the transmission provides twenty four possible gear ratios, due to the eight DCT ratios repeated over the three range ratios.

In detail, the, first gear 22^{I}, the second gear 22^{II} and the third gear 22^{III} are carried in a rotatably free manner over output shaft 3 and it is provided a first dog clutch 13 configured to couple the first gear 22^{I} to the output shaft and a second dog clutch 13 interposed between first and second gears 22^{II}, 22^{III} to selectively couple these latter to output shaft 3.

According to the invention, the DCT 1 comprises two electric machines 23, 24 respectively coupled to the even shaft 11, the odd shaft 12 to mechanically cooperate with these latter.

In detail, electric machines 23, 24 are preferably relatively small electric motors, preferably having voltage lower than 48 V and/or limited power output, e.g. less than 8 or 3 kW.

As obvious, electric machines 23, 24 are electrically fed by a source of electrical energy carried by the vehicle, such as an alternator or a battery pack, not hereby shown for sake of clarity and not further described for sake of brevity.

Electric machines 23, 24 are advantageously electric machines that may be configured to be coupled or decoupled to the respective shaft to avoid their inertia load to act on the shaft when not in use.

DCT 1 further comprises electric controlled actuators (not shown) for controlling the operation of clutches 5, 6, 7, 8 of the dog clutches 13.

DCT 1 further comprises an electronic control unit 30 configured to be electrically connected to the aforementioned actuators and comprising elaboration means suitable for controlling their operations.

In particular, also electric machines 23, 24are electrically connected to and controlled by the electronic control unit 30 which may control the velocity and torque they can transmit to the respective coupled element. The electronic control unit 30 controls said clutches or said electronic motors by sending control electric signals directed to the respective clutches or machines to be controlled.

Electronic control unit 30 can be either the ECU of the vehicle or the ECU of the Driveline. The electronic control unit 30 is configured to control the above cited elements of the transmission 1 as per direct input command of the user of the vehicle or in automatic way following the shift control logic deployed into a specific software code, which can be downloaded into the electronic unit.

Examples of typical operations of the DCT 1 are described in the following.

A first example of operation is the take-off of transmission 1 from a park condition of the vehicle in which the park brake is engaged and the engine is off.

The user/controller switch on the engine and shift the shuttle lever from park to forward position; in this condition clutches 5 and 6 are still open and the engine shaft 2 starts to rotate, consequently all the elements which are directly coupled to the engine shaft 2 (e.g. the input stage 4) are rotating. A gear is selected between the odd or even shaft 11, 12, e.g. gear 14^{IV} of even shaft 11, by moving the dog clutch 13, a gear of the gear range group 20, e.g. gear 22^{I}, is selected by moving the dog clutch 13 of the group 20, even clutch 7 and clutch 23 are engaged. In this way there is a continuous mechanical path from the even shaft 11 to the output shaft 3. For example, the user by moving a lever in the vehicle, allows the forward clutch 5 to be engaged and the housings 10' and 10'' start to rotate and thanks to even clutch 7, the even shaft 11 is forced to rotate as well as the intermediate geared shaft 16 and the output shaft 3 thanks to the mechanical connection which is established form engine shaft 2 to output shaft 3.

A second example of operation is the shift of gear, e.g. passing from gear 14^{IV} to gear 15^{IV}, when the vehicle is moving, e.g. forward.

Since the vehicle is moving forward the mechanical path between the engine shaft 2 and the output shaft 3 is the same as described in the previous example. Therefore, forward clutch 5 is engaged, even clutch 7 is engaged, in order to connect even shaft 11 to the engine input shaft 2 and gears, e.g., 14^{IV} and 22^{I} are selected to connect the even shaft 11 to the output shaft 3 via the intermediate geared shaft 16. The user may upshift (or downshift) by selecting the desired ratio, e.g. by selecting a button on a handle. The vehicle may moreover be provided by a dedicated control software code configured to recognize the torque demand at the output shaft 3 and automatically change the transmission ratio to a better suited ratio.

Supposing that the user/controller decided to upshift to gear 15^{-IV}, the electric machine 24 will make the odd shaft 12 rotating to a target speed, i.e. the speed required to move the dog clutch 13 towards the gear 15^{IV} and engage it with nearly no speed difference between the dog clutch 13 and the gear 15^{IV}. The electronic control unit ensure the management of the dog clutch 13 engagement within a certain maximum tolerance of its speed oscillation in rpm. Once that the dog clutch 13 has engaged the gear 15^{IV} the clutches 7 and 8 are swapped, allowing the torque flow across the new gear ratio.

A third example of operation, according to the invention, is the shift of a range gear, e.g. passing from gear 22^{II} to gear 22^{III}, when the vehicle is moving, e.g. forward, as described above with gear 15^{IV} engaged.

Supposing that the user/controller decided to upshift to gear 22^{III}, then, the control unit 30 will control the electric machines 23, 24to start provide torque to the intermediate shaft 16 while the gear 14^{IV}, i.e. the one on the opposite shaft corresponding to current gear 15^{IV}, is engaged. In the meanwhile, the even clutch 8 starts to disengage till a total disengagement when the electric machines 23, 24 provides enough torque to allow the motion of the vehicle at the speed corresponding to the current selected gear 15^{IV}. Once even clutch 8 is disengaged, then the electric machines 23, 24 will make the intermediate shaft 16 rotating to a target speed, i.e. the speed required to move the dog clutch 13 towards the gear 22^{III} on the shaft 3 and engage it with no speed difference between the dog clutch 13 and the gear 22^{III}, justifying in this way the adoption of the dog clutches into the gear range group design. The electronic control unit ensures the management of the dog clutch engagement within a certain maximum tolerance of its speed oscillation in rpm. Once that the dog clutch has engaged the gear 22^{III}, then the even clutch 8 starts to engage while the electric machines 23, 24 start to reduce the provided torque, till total engagement of clutch 8 where electric machines 23, 24 do no more provide torque to the intermediate shaft 16 that is carried mechanically by input shaft 2 via clutches 5 and 8.

Clearly, during the above defined operation, the electronic control unit operates the speed of electric machines 23, 24 to correctly mesh together their torques in the above described gearings

According to the above operation, the invention relates to a method for controlling a gear range shift into a hybrid electric architecture for DCT transmission 1 as disclosed above comprising the following steps:
- Receiving an input for shifting from a first range gear ratio to a second range gear ratio respectively defined by a first and a second range gears gear carried by the output shaft and meshing with the intermediate shaft that is carried by one between the even and the odd shaft via a preset gear ratio;
- engage the gear on the other between the even and the odd shaft corresponding to the selected gear ratio of the gear engaged on the one between the even and the odd shaft carrying the intermediate shaft;
- disengaging the clutch coupling the one between the even and the odd shaft carrying the intermediate shaft to the input shaft while starting providing torque via electrical machines to the intermediate shaft till to substitute the torque passing through the disengaged clutch;

- making the intermediate shaft rotate by means of the electric machines so as to reach a target velocity that nullifies or minimize the speed difference with respect to the speed defined by the meshing of the second gear with said intermediate shaft;
- when the target velocity is reached, disengage the first gear from output shaft and engage the second gear to the output shaft via dog clutches;
- disengage the gear on the other between the even and the odd shaft corresponding to the selected gear ratio engaged on the one between the even and the odd shaft carrying the intermediate shaft;
- while engaging the clutch coupling the one between the even and the odd shaft carrying the intermediate shaft to the input shaft and stopping to provide torque via electrical machines to the intermediate shaft till no providing torque when the clutch is fully engaged.

In view of the foregoing, the advantages a dual clutch transmission 1 according to the invention and the related method are apparent.

Thanks to the presence of electrical motors 23, 24 it is possible to realize a full power shift of range gear ratios under load condition with a minimized amount of components.

Indeed, with respect to known systems there is no need of auxiliary shafts and clutches.

Moreover, since electrical motors 23, 24 rotates almost freely for most of the time, their contribution to the parasitic losses is not relevant for the total efficiency of the transmission.

Since the shaft to be coupled is sped to a target velocity which is the engaging velocity of the selected gear, synchronizers are replaced by dog clutches. This allow to reduce costs and encumbrances of the hydraulic systems aimed to the control of synchronizers.

In particular, the system provides is more robust and reliable; moreover, the repeatability of the operations is increased to the instantaneous control of actuators and electric machines.

Moreover, since no friction occurs in the gear engagement, no power losses are envisaged and therefore the efficiency of the transmission is expected to increase.

It is clear that modifications can be applied to the described electric hybrid architecture for a DCT which do not extend beyond the scope of protection defined by the claims.

For example, the electric hybrid architecture for DCT may comprise different elements with respect to the described one, e.g. the number and/or typologies of clutches, gears and dog clutches may be varied.

For example the intermediate gear 9 may have the same gear ratio with respect to housings 10' and 10'' or additional stages may be present between the range selecting stage 20 and the output shaft 3.

## Claims

1. An electric hybrid architecture for a dual clutch transmission (1) for an off road vehicle, said dual clutch transmission (1) comprising:
• an input shaft (2) configured to be coupled to the output of an engine of said vehicle,
• an intermediate shaft (16) configured to be coupled to an output shaft (3) further connectable to a drive system of said vehicle,
• a forward clutch (5) and a rearward clutch (6), each configured to be coupled to the input shaft (2);
• first and second shafts (11, 12) each configured to carry a plurality of gears (14, 15), said first and second shafts (11, 12) being configured to be coupled, via respective clutches (7, 8), to said input shaft (2) and being configured to be coupled to said intermediate shaft (16) defining with one of said gears (14, 15) a predetermined speed ratio (14^{I}, 14^{II}, 14^{III}, 14^{IV}, 15^{I}, 15^{II}, 15^{III}, 15^{IV}) between said input shaft (2) and said intermediate shaft (16), and
• a range gear stage (20) directly carried by said output shaft (3) and comprising a plurality of range gears (22^{I}, 22^{I}, 22^{III}) carried in a rotatably free manner over said output shaft (3);
said dual clutch transmission (1) comprising a plurality of selection elements (13) suitable for selectively coupling said gears (14, 15, 22) to the respective shafts (11, 12, 3);
said dual clutch transmission (1) comprising a first electric machine (23) and a second electric machine (24) configured to provide a torque to respectively said first and second shafts (11, 12) ),
said dual clutch transmission (1) further comprising an electronic control unit (30) provided with elaboration means configured to control said electric machines (23, 24) and said selection elements (13);
said electric hybrid architecture being **characterized in that** said electronic control unit (30) is configured to carry out the following steps:
• receiving an input for shifting from a first range gear ratio to a second range gear ratio respectively defined by a first and a second range gears gear (22^{I}, 22^{II}, 22^{III}) carried by the output shaft (3) and meshing with the intermediate shaft (16) that is carried by one between the first and second shafts (11, 12) via a preset gear ratio;
• engage a gear (14^{I}, 14^{II}, 14^{III}, 14^{IV}, 15^{I}, 15^{II}, 15^{III}, 15^{IV}) on the other between the first and second shafts (11, 12) corresponding to the selected gear ratio of the gear (14^{I}, 14^{II}, 14^{III}, 14^{IV}, 15^{I}, 15^{II}, 15^{III}, 15^{IV}) engaged on the one between the first and second shafts (11, 12) carrying the intermediate shaft (16);
• disengaging the clutch (7, 8) coupling the one between the first and second shafts (11, 12) carrying the intermediate shaft (16) to the input shaft (2) while starting providing torque via electrical motors (23, 24) to the intermediate shaft (16) to substitute the torque passing through the disengaged clutch (7, 8);
• making the intermediate shaft (16) rotate by means of the electric machines (23, 24) so as to reach a target velocity that nullifies or minimize the speed difference with respect to the speed defined by the meshing of the second gear (22^{I}, 22^{II}, 22^{III}) with said intermediate shaft (16) ;
• when said target velocity is reached, disengage the first gear (22^{I}, 22^{II}, 22^{III}) from output shaft and engage the second gear (22^{I}, 22^{II}, 22^{III}) to the output shaft (3) via said selection element;
• disengage the gear (14^{I}, 14^{II}, 14^{III}, 14^{IV}, 15^{I}, 15^{II}, 15^{III}, 15^{IV}) on the other between the first and second shafts (11, 12) corresponding to the selected gear ratio engaged on the one between the first and second shaft shafts (11, 12) carrying the intermediate shaft (16);
while engaging the clutch (7, 8) coupling the one between the first and second shafts (11, 12) carrying the intermediate shaft (16) to the input shaft (2) and stopping to provide torque via electrical machines (23, 24) to said intermediate shaft (16) till no providing torque when said clutch (7, 8) is fully engaged.

2. Architecture according to claim 1, wherein at least one among said electric machines (23, 24) is directly coupled to the respective shaft (11, 12, 16).

3. Architecture according to any of the preceding claims, wherein at least one among said electric machines (23, 24) is coupled to the respective shaft (11, 12, 16) via a gearing (26).

4. Architecture according to any of the preceding claims, wherein said electric machines (23, 24) have a nominal working voltage around 48 Volt.

5. Architecture according to any of the preceding claims, wherein said electric machines (23, 24)have an output power less than 8 kW.

6. Architecture according to any of the preceding claims, wherein said electric machines (23, 24) have an output power less than 3 kW.

7. Architecture according to any of the preceding claims, wherein said electric machines (23, 24) being selectively operating on the respective shaft (11, 12, 16).

8. Architecture according to any of the preceding claims, wherein said selection elements (13) comprises a joint or a dog clutch.

9. Method for operating an electric hybrid architecture for a dual clutch transmission (1) according to any of the preceding claims.

## Patentansprüche

1. Elektrische Hybridarchitektur für ein Doppelkupplungsgetriebe (1) für ein Geländefahrzeug, wobei das Doppelkupplungsgetriebe (1) aufweist:
eine Eingangswelle (2), die dazu eingerichtet ist, mit einem Ausgang eines Motors des Fahrzeugs gekoppelt zu sein,
eine Verbindungswelle (16), die dazu eingerichtet ist, mit einer Ausgangswelle (3) gekoppelt zu sein, die weiter mit einem Antriebssystem des Fahrzeugs verbindbar ist,
eine Vorwärtskupplung (5) und eine Rückwärtskupplung (6), von denen jede dazu eingerichtet ist, mit der Eingangswelle (2) gekoppelt zu sein;
eine erste und eine zweite Welle (11, 12), die jeweils dazu eingerichtet sind, eine Mehrzahl von Zahnrädern (14, 15) zu tragen, wobei die erste und die zweite Welle (11, 12) dazu eingerichtet sind, mittels entsprechenden Kupplungen (7, 8), mit der Eingangswelle (2) gekoppelt zu sein und dazu eingerichtet sind, mit der Verbindungswelle (16) gekoppelt zu sein, wodurch mit einem der Zahnräder (14, 15) ein vorbestimmtes Übersetzungsverhältnis (14^{I}, 14^{II}, 14^{III}, 14^{IV}, 15^{I}, 15^{II}, 15^{III}, 15^{IV}) zwischen der Eingangswelle (2) und der Verbindungswelle (16) definiert wird, und
eine Schiebemuffe (20), die direkt von der Ausgangswelle (3) getragen ist und die eine Mehrzahl von Zahnradsätzen (22^{I}, 22^{II}, 22^{III}) aufweist, die frei drehbar über der Ausgangswelle (3) getragen sind;
wobei das Doppelkupplungsgetriebe (1) eine Mehrzahl von Auswahlelementen (13) aufweist, die zur wahlweisen Kopplung der Zahnräder (14, 15, 22) mit den entsprechenden Wellen (11, 12, 3) geeignet sind;
wobei das Doppelkupplungsgetriebe (1) eine erste elektrische Maschine (23) und eine zweite elektrische Maschine (24) aufweist, die dazu eingerichtet sind, ein Drehmoment an die erste bzw. die zweite Welle (11, 12) bereitzustellen,
wobei das Doppelkupplungsgetriebe (1) des Weiteren eine elektrische Steuereinheit (30) aufweist, die mit Verarbeitungsmitteln versehen ist, die dazu eingerichtet sind, die elektrischen Maschinen (23, 24) und die Auswahlelemente (13) zu steuern; wobei die elektrische Steuereinheit (30) dazu eingerichtet ist, die folgenden Schritte auszuführen:
• Empfangen einer Eingabe zum entsprechenden Schalten von einem ersten Zahnradsatz-Übersetzungsverhältnis zu einem zweiten Zahnradsatz-Übersetzungsverhältnis, das jeweils von einem ersten beziehungsweise einem zweiten Zahnradsatz (22^{I}, 22^{II}, 22^{III}) definiert ist, der von der Ausgangswelle (3) getragen ist und mit der Verbindungswelle (16), die von einer aus der ersten oder der zweiten Welle (11, 12) getragen ist, über ein vorbestimmtes Übersetzungsverhältnis eingreift;
• Einrücken eines Zahnrads (14^{I}, 14", 14^{III}, 14^{IV}, 15^{I}, 15", 15^{III}, 15^{IV}) an der anderen aus der ersten und der zweiten Welle (11, 12) entsprechend dem ausgewählten Übersetzungsverhältnis der Zahnräder (14^{I}, 14^{II}, 14^{III}, 14^{IV}, 15^{I}, 15", 15^{III}, 15^{IV}), die mit der einen aus erster und zweiter Welle (11, 12), die die Verbindungswelle (16) trägt, eingerückt sind;
• Ausrücken der Kupplung (7, 8), die die eine aus erster und zweiter Welle (11, 12), die die Verbindungswelle (16) trägt, mit der Eingangswelle (2) koppelt, während damit begonnen wird, Drehmoment mittels der elektrischen Maschinen (23, 24) an die Verbindungswelle (16) bereitzustellen zum Substituieren des Drehmoments, das die ausgerückte Kupplung (7, 8) passiert;
• Rotierenlassen der Verbindungswelle (16) mittels der elektrischen Maschinen (23, 24), um eine Zielgeschwindigkeit zu erreichen, die die Geschwindigkeitsdifferenz in Bezug zu der Geschwindigkeit, die durch das Eingreifen des zweiten Zahnradsatzes (22^{I}, 22^{II}, 22^{III}) mit der Verbindungswelle (16) definiert ist, ausgleicht oder minimiert;
• wenn die Zielgeschwindigkeit erreicht ist, Ausrücken des ersten Zahnradsatzes (22^{I}, 22", 23^{III}) von der Ausgangswelle und Einrücken des zweiten Zahnradsatzes (22', 22", 22^{III}) mit der Ausgangswelle (3) mittels des Auswahlelements;
• Ausrücken des Zahnrads (14^{I}, 14", 14^{III}, 14^{IV}, 15^{I}, 15", 15^{III}, 15^{IV}) von der anderen aus der ersten und zweiten Welle (11, 12) entsprechend dem gewählten Übersetzungsverhältnis, das bei der einen aus erster und zweiter Welle (11, 12), die die Verbindungswelle (16) trägt, eingestellt ist;
während die Kupplung (7, 8), die die eine aus erster oder zweiter Welle (11, 12), die die Verbindungswelle (16) trägt, mit der Eingangswelle (2) koppelt, eingerückt wird und das Bereitstellen von Drehmoment mittels der elektrischen Maschinen (23, 24) an die Verbindungswelle (16) unterbrochen wird, bis kein Drehmoment mehr bereitgestellt wird, wenn die Kupplung (7, 8) vollständig eingerückt ist.

2. Architektur nach Anspruch 1, wobei zumindest eine der elektrischen Maschinen (23, 24) direkt mit der entsprechenden Welle (11, 12, 16) gekoppelt ist.

3. Architektur nach einem der vorhergehenden Ansprüche, wobei zumindest eine der elektrischen Maschinen (23, 24) mit der entsprechenden Welle (11, 12, 16) mittels einer Getriebeübersetzung (26) gekoppelt ist.

4. Architektur nach einem der vorhergehenden Ansprüche, wobei die elektrischen Maschinen (23, 24) eine nominale Arbeitsspannung von etwa 48 V aufweisen.

5. Architektur nach einem der vorhergehenden Ansprüche, wobei die elektrischen Maschinen (23, 24) eine Ausgangsleistung von weniger als 8 kW aufweisen.

6. Architektur nach einem der vorhergehenden Ansprüche, wobei die elektrischen Maschinen (23, 24) eine Ausgangsleistung von weniger als 3 kW aufweisen.

7. Architektur nach einem der vorhergehenden Ansprüche, wobei die elektrischen Maschinen (23, 24) wahlweise an der entsprechenden Welle (11, 12, 16) arbeiten.

8. Architektur nach einem der vorhergehenden Ansprüche, wobei die Auswahlelemente (13) eine Rutsch- oder eine Klauenkupplung aufweisen.

9. Verfahren zum Betreiben einer elektrischen Hybridarchitektur für ein Doppelkupplungsgetriebe (1) nach einem der vorhergehenden Ansprüche.

## Revendications

1. Une architecture hybride électrique pour une transmission à double embrayage (1) pour un véhicule tout-terrain, ladite transmission à double embrayage (1) comprenant :
• un arbre d'entrée (2) configuré pour être couplé à la sortie d'un moteur dudit véhicule,
• un arbre intermédiaire (16) configuré pour être couplé à un arbre de sortie (3) pouvant en outre être raccordé à un système d'entraînement dudit véhicule,
• un embrayage avant (5) et un embrayage arrière (6), chacun configuré pour être couplé à l'arbre d'entrée (2) ;
• un premier et un second arbre (11, 12) chacun configuré pour porter une pluralité d'engrenages (14, 15), lesdits premier et second arbres (11, 12) étant configurés pour être couplés, par le biais des embrayages respectifs (7, 8), audit arbre d'entrée (2) et étant configurés pour être couplés audit arbre intermédiaire (16) définissant avec l'un desdits engrenages (14, 15) un rapport de transmission prédéterminé (14^{I}, 14", 14^{III}, 14^{IV}, 151, 15", 15^{III}, 15^{IV}) entre ledit arbre d'entrée (2) et ledit arbre intermédiaire (16), et
• une gamme d'étages d'engrenages (20) portée directement par ledit arbre de sortie (3) et comprenant une pluralité de gammes d'engrenages (22^{I}, 22^{I}, 22^{III}) portées de manière libre en rotation sur ledit arbre de sortie (3) ;
ladite transmission à double embrayage (1) comprenant une pluralité d'éléments de sélection (13) adaptés pour coupler de manière sélective lesdits engrenages (14, 15, 22) aux arbres respectifs (11, 12, 3) ;
ladite transmission à double embrayage (1) comprenant une première machine électrique (23) et une seconde machine électrique (24) configurées pour fournir un couple respectivement audit premier et audit second arbre (11, 12),
ladite transmission à double embrayage (1) comprenant en outre une unité de commande électronique (30) pourvue de moyens d'élaboration configurés pour commander lesdites machines électriques (23, 24) et lesdits éléments de sélection (13) ;
ladite architecture hybride électrique étant **caractérisée en ce que** ladite unité de commande électronique (30) est configurée pour réaliser les étapes suivantes :
• la réception d'une entrée pour passer d'une première gamme de rapports de transmission à une seconde gamme de rapports de transmission définies respectivement par un premier et un second engrenage de gamme d'engrenages (22^{I}, 22^{II}, 22^{III}) portés par l'arbre de sortie (3) et l'engrènement avec l'arbre intermédiaire (16) qui est porté par l'un parmi le premier et le second arbre (11, 12) à l'aide d'un rapport de transmission prédéfini ;
• l'engagement d'un engrenage (14^{I}, 14^{II}, 14^{III}, 14^{IV}, 15^{I}, 15^{II}, 15^{III}, 15^{IV}) sur l'autre parmi le premier et le second arbre (11, 12) correspondant au rapport de transmission sélectionné de l'engrenage (14^{I}, 14^{II}, 14^{III}, 14^{IV}, 15^{I}, 15^{II}, 15^{III}, 15^{IV}) engagé sur l'un parmi le premier et le second arbre (11, 12) portant l'arbre intermédiaire (16) ;
• le désengagement de l'embrayage (7, 8) en couplant l'un parmi le premier et le second arbre (11, 12) portant l'arbre intermédiaire (16) à l'arbre d'entrée (2) tout en commençant à fournir un couple à l'aide des moteurs électriques (23, 24) à l'arbre intermédiaire (16) pour remplacer le couple passant par l'embrayage désengagé (7, 8) ;
• le pivotement de l'arbre intermédiaire (16) au moyen des machines électriques (23, 24) de manière à atteindre une vitesse cible qui annule ou minimise la différence de vitesse par rapport à la vitesse définie par l'engrènement du second engrenage (22', 22", 22^{III}) avec ledit arbre intermédiaire (16) ;
• lorsque ladite vitesse cible est atteinte, le désengagement du premier engrenage (22^{I}, 22^{II}, 22^{III}) de l'arbre de sortie et l'engagement du second engrenage (22', 22", 22^{III}) sur l'arbre de sortie (3) à l'aide dudit élément de sélection ;
• le désengagement d'un engrenage (14^{I}, 14^{II}, 14^{III}, 14^{IV}, 15^{I}, 15^{II}, 15^{III}, 15 ^{IV}) sur l'autre parmi le premier et le second arbre (11, 12) correspondant au rapport de transmission sélectionné engagé sur l'un parmi le premier et le second arbre (11, 12) portant l'arbre intermédiaire (16) ;
tout en engageant l'embrayage (7, 8) couplant l'un parmi le premier et le second arbre (11, 12) portant l'arbre intermédiaire (16) à l'arbre d'entrée (2) et en s'arrêtant pour fournir un couple à l'aide des machines électriques (23, 24) audit arbre intermédiaire (16) jusqu'à ce qu'il n'y ait plus de couple lorsque ledit embrayage (7, 8) est complètement engagé.

2. Architecture selon la revendication 1, dans laquelle au moins une parmi lesdites machines électriques (23, 24) est directement couplée à l'arbre respectif (11, 12, 16).

3. Architecture selon l'une quelconque des revendications précédentes, dans laquelle au moins une parmi lesdites machines électriques (23, 24) est couplée à l'arbre respectif (11, 12, 16) à l'aide d'un engrenage (26).

4. Architecture selon l'une quelconque des revendications précédentes, dans laquelle lesdites machines électriques (23, 24) ont une tension fonctionnelle nominale d'environ 48 Volts.

5. Architecture selon l'une quelconque des revendications précédentes, dans laquelle lesdites machines électriques (23, 24) ont une puissance de sortie inférieure à 8 kW.

6. Architecture selon l'une quelconque des revendications précédentes, dans laquelle lesdites machines électriques (23, 24) ont une puissance de sortie inférieure à 3 kW.

7. Architecture selon l'une quelconque des revendications précédentes, dans laquelle lesdites machines électriques (23, 24) fonctionnent de manière sélective sur l'arbre respectif (11, 12, 16).

8. Architecture selon l'une quelconque des revendications précédentes, dans laquelle lesdits éléments de sélection (13) comprennent un raccordement ou un embrayage à crabots.

9. Procédé de fonctionnement d'une architecture hybride électrique pour une transmission à double embrayage (1) selon l'une quelconque des revendications précédentes.
